# EUROPÄISCHE PATENTSCHRIFT

(11) **EP 3 596 380 B1**
(45) Veröffentlichungstag und Bekanntmachung des Hinweises auf die Patenterteilung: **14.10.2020**
(21) Anmeldenummer: 19708968.3
(22) Anmeldetag: 21.02.2019
(51) Int. Cl.: F16M 11/04, F16M 13/00, G06F 1/16, H04M 1/04

(54) **KLEMMBACKENHALTER FÜR SMARTPHONES ODER TABLETS MIT DIEBSTAHLSCHUTZ**
JAW GRIP MOUNT FOR SMARTPHONES OR TABLETS WITH THEFT PROTECTION
SUPPORT À MÂCHOIRES DE SERRAGE POUR DES TÉLÉPHONES INTELLIGENTS OU DES TABLETTES INTÉGRANT UNE PROTECTION ANTI-VOL

(30) Priorität: 21.02.2018 DE 202018000931 U
(43) Veröffentlichungstag der Anmeldung: 22.01.2020
(73) Patentinhaber: Wanzl GmbH & Co. KGaA, 89340 Leipheim (DE)
(72) Erfinder: RICHTER, Harald, 75331 Engelsbrand (DE); DAMINGER, Johann, 89233 Neu-Ulm (DE); RUF, Paul, 87745 Eppishausen (DE); OECHSLE, Robin, 89079 Ulm (DE)
(86) Internationale Anmeldenummer: PCT/EP2019/054325
(87) Internationale Veröffentlichungsnummer: WO 2019/162384

(56) Entgegenhaltungen:
- US-A1- 2013 148 273

## Beschreibung

Die Erfindung betrifft einen Klemmbackenhalter für Smartphones oder Tablets mit Diebstahlschutz.

Als Klemmbackenhalter ausgebildete Halterungen für Smartphones oder Tablets sind wie z.B. aus der US 2013/148273 bekannt, als

Universalhalterungen bekannt. Sie halten das Smartphone oder Tablet zwischen zwei relativ zueinander mit relativ großem Verstellweg beweglichen Backen, die entweder an den beiden Seitenrändern oder am oberen und unteren Rand des Smartphones oder Tablets angreifen und aufgrund des Backenverstellwegs zur Aufnahme von Smartphones oder Tablets unterschiedlicher Größe geeignet sind.

Bei solchen Klemmbackenhaltern ist mindestens eine der beiden Backen beweglich und es ist dafür ein Mechanismus vorgesehen, der die bewegliche Backe durch Federkraft in eine geöffnete Stellung vorspannt und bei eingelegtem Gerät das Schließen der Backe durch Druck entgegen der Federkraft bis zur Anlage an das Gerät ermöglicht, wobei ein Ratschenmechanismus die Rückkehr in die geöffnete Stellung sperrt. Durch eine Auslösetaste kann der Ratschenmechanismus entsperrt werden, um die mindestens eine bewegliche Backe in ihre geöffnete Stellung zurückkehren zu lassen.

Bei herkömmlichen Klemmbackenhaltern ist also das Entnehmen des Geräts aus dem Klemmbackenhalter durch jedermann ohne weiteres auf der Stelle möglich, indem einfach die Auslösetaste betätigt wird und sich der Klemmbackenhalter dann öffnet.

Aufgabe der Erfindung ist die Schaffung eines Klemmbackenhalters für Smartphones oder Tablets, der mit einem Diebstahlschutz ausgestattet ist, so dass ein darin gehaltertes Gerät nicht ohne weiteres durch irgendjemand weggenommen werden kann.

Die Erfindung ermöglicht es insbesondere, Einkaufswagen in Supermärkten oder Baumärkten mit Haltern für Smartphones oder Tablets auszustatten, in welche Kunden während des Einkaufs ihr Smartphone oder Tablet einlegen können, um Einkaufslisten, Materiallisten, Maßlisten oder ähnliches anzuzeigen und so den Einkauf zu erleichtern. Eine weitere Rolle spielt dabei die Möglichkeit interaktiver Werbe- und Beratungsfunktion, wie sie an manchen Verkaufsstätten schon praktiziert wird, wo über Smartphone oder Tablet Werbebotschaften, Suchhilfen, produktspezifische Beratungen und Informationen und ähnliches von der Verkaufsstätte auf das Smartphone oder Tablet kommuniziert werden können, weshalb eine Halterung am Einkaufswagen besonders sinnvoll ist, damit der Kunde während des Einkaufs das Smartphone oder Tablet ständig im Blick und dabei die Hände frei haben kann. Für eine solche Anwendung ist es aber wichtig, eine Diebstahlsicherung vorzunehmen, die zumindest ausreicht, um ein schnelles Wegnehmen des Geräts in einem unbeobachteten Augenblick zu verhindern, wenn der Kunde sich gerade mit Waren im Regal beschäftigt.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Der erfindungsgemäße Klemmbackenhalter ist dazu mit einem Kombinationssperrmechanismus ausgestattet, wie er prinzipiell aus Zahlenschlössern bekannt ist, der die Auslösetaste sperrt und diese nur bei Einstellen der korrekten Kombination freigibt und deren Betätigung ermöglicht.

Die Erfindung wird nachstehend anhand eines Ausführungsbeispiels unter Bezugnahme auf die anliegenden Zeichnungen mehr im Einzelnen beschrieben, in denen zeigt:
- Fig. 1: eine perspektivische Ansicht eines Halters nach der Erfindung schräg von vorn,
- Fig. 2: eine perspektivische Ansicht des Halters nach Fig. 1 schräg von hinten,
- Fig. 3: eine Frontansicht des Halters bei geschlossenen Backen,
- Fig. 4: eine Frontansicht des Halters bei geöffneten Backen,
- Fig. 5: einen Schnitt durch den Halter längs der Schnittlinie V-V in Fig. 3,
- Fig. 6: eine aufgeschnittene Frontansicht des Halters mit in der Sperrstellung befindlichen Sperrschieber,
- Fig. 7: eine Ansicht ähnlich Fig. 6 mit in der Lösestellung befindlichem Sperrschieber,
- Fig. 8: einen Halter mittels eines Adapters angeordnet an einem Rundrohrgriff eines Transportwagens,
- Fig. 9, 10, 11: verschiedene Darstellungen des Halters mit Adapter,
- Fig. 12: einen Halter mittels eines weiteren Adapters angeordnet an einem Münzpfandsystem eines Transportwagens,
- Fig. 13, 14: den ersten Adapter mit einer Anordnungshilfe,

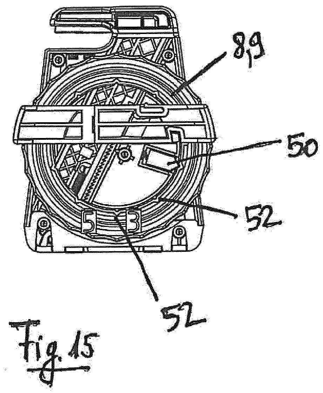

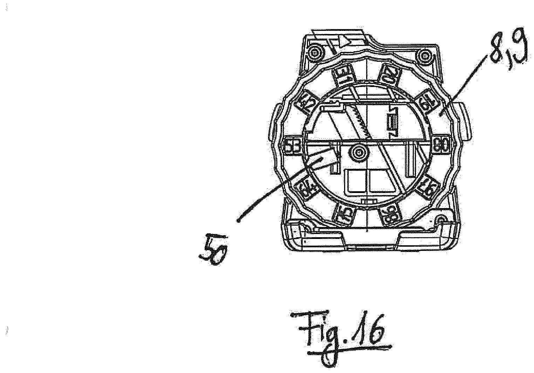

- Fig. 15, 16: einen Halter mit einem zusätzlichen Federelement.

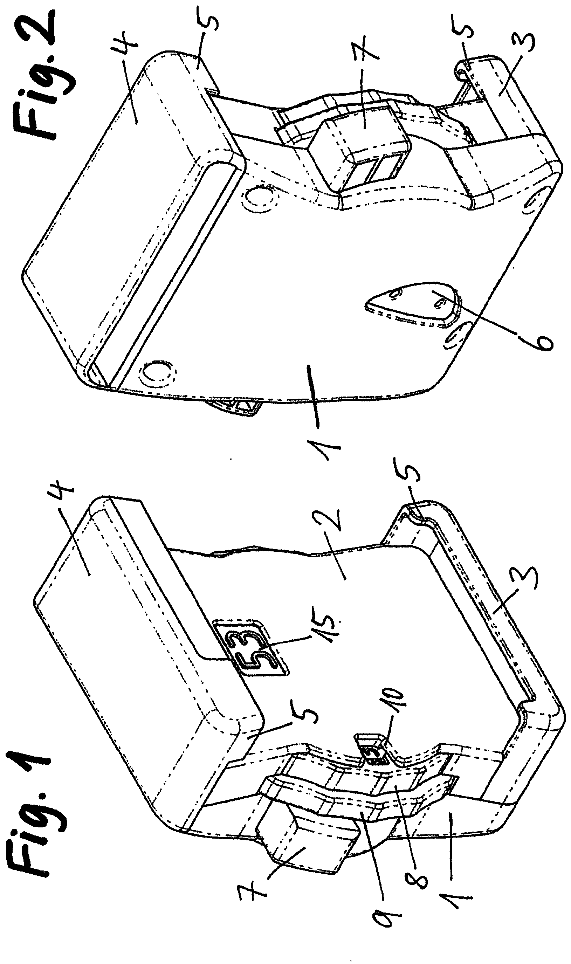

Die Fig. 1 und 2 zeigen jeweils in perspektivischer Ansicht schräg von vorn bzw. schräg von hinten einen Klemmbackenhalter nach der Erfindung, der mit einem Diebstahlschutz ausgestattet ist.

Der Klemmbackenhalter hat einen als Gehäuse zur Aufnahme des Betätigungsmechanismus ausgebildeten Korpus 1, dessen Frontwand eine Auflagefläche 2 für ein Smartphone oder Tablet bildet, und an dessen unterem Bereich eine feststehende Backe 3 angeordnet ist. Oben am Korpus 1 ist eine bewegliche Backe 4 angeordnet.

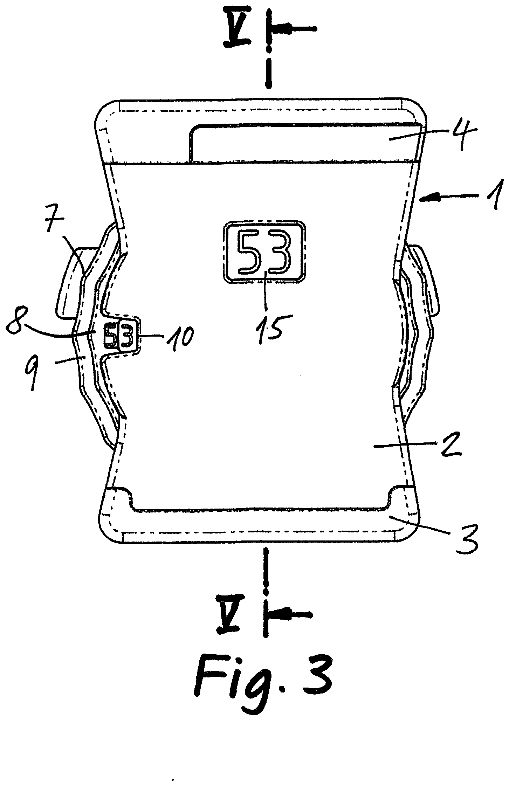

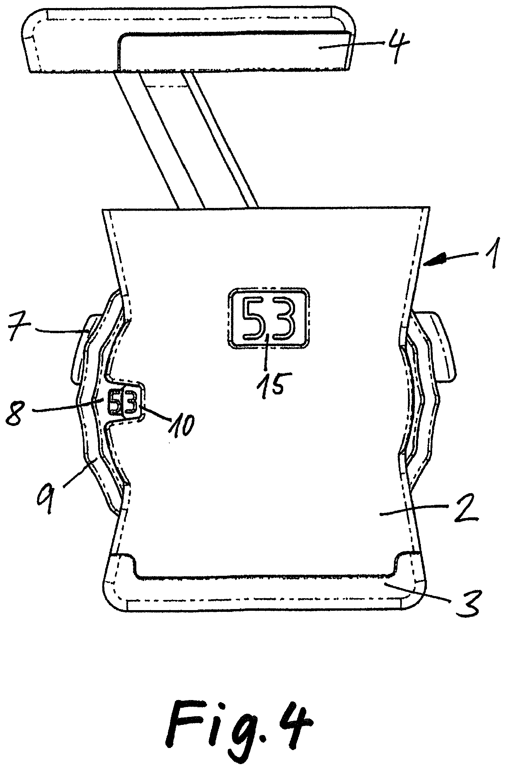

Die Fig. 1 und 2 und die den Halter in Frontansicht zeigende Fig. 3 zeigen den Halter jeweils im geschlossenen Zustand, also bei vollständig eingefahrener oberen Backe 4. Die den Halter ebenfalls in Frontansicht zeigende Fig. 4 zeigt den Halter bei vollständig ausgefahrener oberer Backe 4.

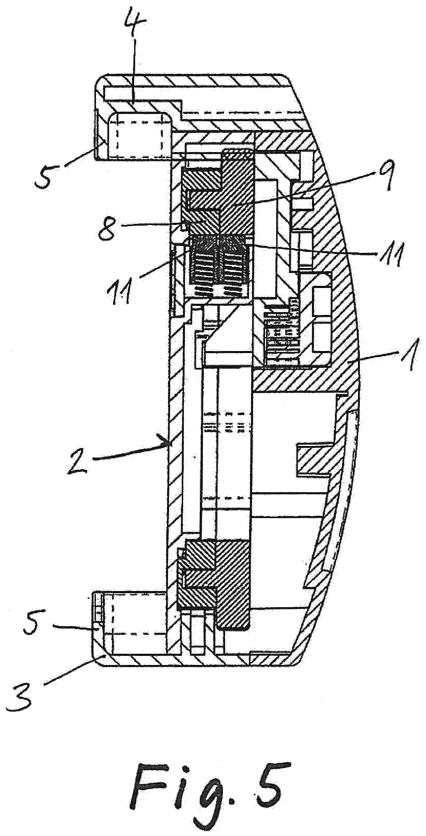

Wie man schon aus den perspektivischen Ansichten der Fig. 1 und 2 besonders bei der unteren Backe 3 und sehr deutlich in der Schnittdarstellung nach Fig. 5 erkennen kann, sind sowohl die untere Backe 3 als auch die obere Backe 4 jeweils muldenförmig ausgebildet, um den unteren Randbereich und den oberen Randbereich des Smartphones oder Tablets aufzunehmen, und haben seitliche und frontseitige Randleisten 5, die einwärts gezogen sind, so dass sie bei eingelegtem Smartphone oder Tablet dessen oberen und unteren Bereich zusammen mit der Auflagefläche 2 allseitig umgreifen und damit bei geschlossenem Halter ein Herausnehmen des Smartphones oder Tablets aus dem Halter unmöglich machen.

Wie man in Fig. 2 erkennen kann, kann der Korpus 1 mit einem Anschluß 6 versehen sein, der beim Ausführungsbeispiel als Vertiefung zur formschlüssigen Aufnahme eines Gegenelements und mit Schraubenlöchern ausgebildet ist, um den Klemmbackenhalter an einer Tragvorrichtung beispielsweise an einem Einkaufswagen montieren zu können.

Der im Korpus 1 des Klemmbackenhalters untergebrachte Betätigungsmechanismus umfaßt einen üblichen Betätigungsmechanismus für die bewegliche obere Backe 4, der die obere Backe 4 federelastisch in seine in Fig. 4 dargestellte geöffnete Position vorspannt und ein Schließen der oberen Backe 4 entgegen der Federvorspannung mit einem Ratschenmechanismus bis zur Anlage an ein eingelegtes Smartphone oder Tablet und das Halten in der jeweiligen Schließposition ermöglicht, und der mittels einer als Sperrschieber ausgebildeten Auslösetaste 7 entsperrbar ist, um die obere Backe 4 in ihre ausgefahrene Position zurückkehren zu lassen. Insoweit entspricht der Betätigungsmechanismus dem Stand der Technik und bedarf keiner weiteren Beschreibung.

Weiter umfaßt der Betätigungsmechanismus bei dem erfindungsgemäßen Klemmbackenhalter einen Kombinationssperrmechanismus, der im folgenden insbesondere unter Bezugnahme auf die Fig. 5 bis 7 im Einzelnen beschrieben wird. Fig. 5 zeigt einen Schnitt entlang der Schnittlinie V-V in Fig. 3, und die Fig. 6 und 7 zeigen jeweils eine aufgeschnittene Frontansicht des Halters ohne die die Auflagefläche 2 bildende Frontwand und ohne das vordere Stellrad 8, so dass nur das hintere Stellrad 9 und dessen Zusammenwirken mit dem Sperrschieber 7 sichtbar ist.

Der Kombinationssperrmechanismus folgt dem generellen Prinzip üblicher Zahlenschlösser und weist beim dargestellten Ausführungsbeispiel zwei scheibenförmige Stellräder 8 und 9 auf, nämlich ein vorderes Stellrad 8 und ein hinteres Stellrad 9, die aufeinanderliegend und konzentrisch angeordnet sind und von denen das vordere Stellrad 8 einen etwas kleineren Durchmesser hat als das hintere Stellrad 9, so dass sich eine Durchmesserstaffelung ergibt, die von der Frontseite des Halters her beide Stellräder 8 und 9 leicht erkennbar und jeweils gesondert betätigbar macht. Beide Stellräder 8 und 9 haben, wie aus den Fig. 1 bis 4 ersichtlich ist, einen mit Griffmulden profilierten Rand, um die Stellräder mit den Fingern leicht ergreifen zu können. Beide Stellräder 8 und 9 ragen beiderseits etwas über den Korpus 1 oder jedenfalls die Auflagefläche 2 hinaus, um sie leicht ergreifen zu können. Außerdem greift das hinter_liegende Stellrad 9 mit einem frontseitig angeformten Ring in eine entsprechende Nut des vorne liegenden Stellrads 8 ein, so dass die beiden Stellräder 8 und 9 relativ zueinander zentriert sind.

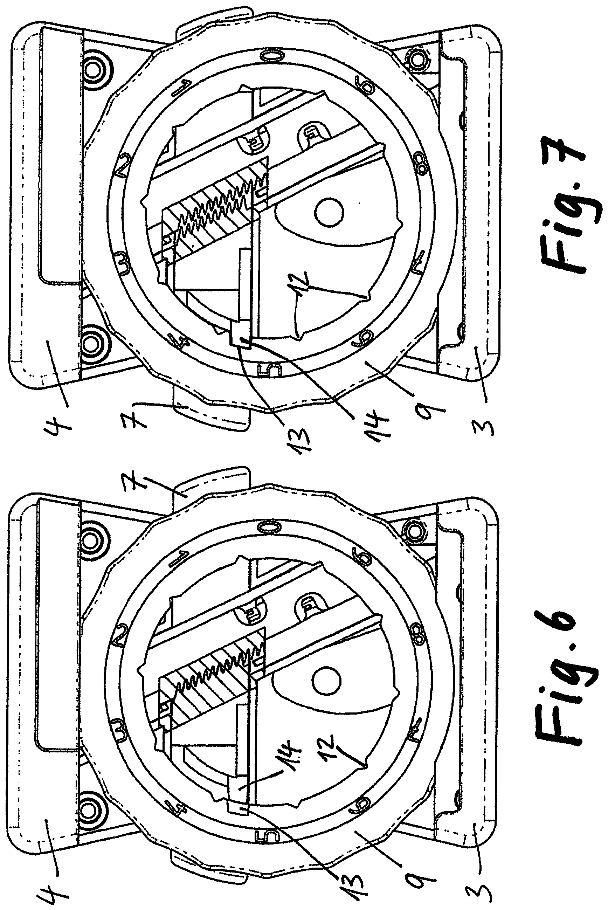

Die beiden Stellräder 8 und 9 haben jeweils eine Anzahl definierter Drehpositionen, die jeweils mit einer vorderseitig am jeweiligen Stellrad angebrachten und für den Benutzer sichtbaren Bezeichnung versehen sind. Beim vorliegenden Ausführungsbeispiel sind es für jedes Stellrad zehn Positionen mit durch die Ziffern 0 bis 9 gebildeten Bezeichnungen. Diese sind in einem Fenster 10 der Auflagefläche 2 nebeneinander sichtbar, die als seitliche Einbuchtung ausgebildet ist. In dem Fenster 10 sind nebeneinander die jeweiligen Einstellpositionen der beiden Stellräder 8 und 9 sichtbar, hier die Position "5" des einen Stellrads und die Position "3" des anderen Stellrads, also die Einstellkombination "53". Die jeweiligen Einstellpositionen werden jeweils durch einen im Schnitt nach Fig. 5 sichtbaren, jedem Stellrad 8 und 9 zugeordneten und federnd gegen dessen Innenumfang vorgespannten Rastkörper 11 und am Innenumfang jedes Stellrads angeordnete, in den Fig. 6 und 7 sichtbare, als Einbuchtungen ausgebildete Rastöffnungen 12 definiert, in welche der Rastkörper 11 in der jeweils eingestellten Position einrastet.

Außerdem weisen die beiden Stellräder 8 und 9, wie aus den Fig. 6 und 7 erkennbar ist, an ihrem Innenumfang jeweils eine Schlüsselöffnung 13 auf, in welche eine Schlüsselnase 14 des Sperrschiebers 7 eingreifen kann, wenn das jeweilige Stellrad sich in der das Öffnen der beweglichen Backe 4 ermöglichenden Drehstellung befindet. Fig. 6 zeigt den Mechanismus bei in der Sperrstellung befindlichen Sperrschieber, aber bereits in die das Betätigen des Sperrschiebers 7 in die Freigabestellung ermöglichenden Position des hinteren Stellrads 9, wo Schlüsselöffnung 13 und Schlüsselnase 14 miteinander fluchten. Fig. 7 zeigt einen Mechanismus bei in die Freigabestellung verschobenem Sperrschieber 7, wo die Schlüsselnase 14 in die Schlüsselöffnung 13 eintaucht und die bewegliche Backe 4 (noch im geschlossenen Zustand dargestellt) in die geöffnete Stellung ausfahren kann.

Beim dargestellten Ausführungsbeispiel sind der Einfachheit halber für jedes Stellrad 8 und 9 zehn mögliche Drehpositionen mit den Bezeichnungen jeweils durch die Ziffern 0 bis 9 vorgesehen. Damit ergeben sich bei zwei Stellrädern 8 und 9 hundert mögliche einstellbare Kombinationen. Es versteht sich, dass abweichend vom dargestellten Ausführungsbeispiel auch andere Anzahlen von möglichen Drehpositionen jedes Stellrads möglich sind, insbesondere auch Anzahlen von mehr als zehn, und als Bezeichnung der jeweiligen Drehpositionen können auch Buchstaben dienen. Größere Anzahlen von einstellbaren Drehpositionen jedes Stellrads bieten sich an, wenn der Durchmesser und somit der Umfang jedes Stellrads dafür ausreichend groß ist, und je größer die Anzahl der einstellbaren Drehpositionen jedes Stellrads ist, desto größer ist die Anzahl der sich ergebenden möglichen Einstellkombinationen. Dabei können die Anzahlen der einstellbaren Drehpositionen bei den beiden Stellrädern auch unterschiedlich groß sein. Weiter ist es natürlich auch möglich, noch ein drittes Stellrad zu verwenden und dadurch die Anzahl der möglichen Kombinationen stark zu erhöhen, was allerdings eine entsprechend große Bautiefe des Korpus 1 erfordert.

Grundsätzlich ist auch die Verwendung nur eines Stellrads möglich, wobei aber nur eine entsprechend niedrige Zahl von Einstellmöglichkeiten realisiert werden kann. Statt Stellrädern könnten auch andere Einstellorgane mit gleicher Funktion eingesetzt werden.

Um Halter mit jeweils einer bestimmten Kombination aus der verfügbaren Anzahl möglicher Kombinationen herstellen zu können, genügt es, bei jeweils gleich gefertigten Stellrädern 8 und 9 nur den Kranz der aufzubringenden Kombinationsbezeichnungen relativ zur Schlüsselöffnung in unterschiedlichen Drehpositionen aufzubringen und aus den so beim Ausführungsbeispiel möglichen zehn verschiedenen vorderen Stellrädern 8 und den zehn verschiedenen hinteren Stellrädern 9 verschiedene Kombinationen zusammenzustellen. Die für jeden Halter gültige Kombination kann, wie in den Zeichnungen dargestellt ist, auf der Auflagefläche 2 in Gestalt einer Beschriftung 15 angebracht werden, die für den Benutzer sichtbar ist, aber bei aufgelegtem Smartphone oder Tablet verdeckt und damit für andere nicht sichtbar ist. Nach dem Auflegen des Smartphones oder Tablets und Schließen der beweglichen Backe 4 werden die Stellräder 8 und 9 verdreht, so dass der Halter bei geschlossenen Backen gesperrt und das darin aufgenommene Smartphone oder Tablet diebstahlgesichert ist.
In einer bevorzugten Ausführungsform ist der Halter an einem von Hand beweglichen Transportwagen angeordnet. Hierfür findet ein entsprechender Adapter 20, 30 Verwendung, der eine formschlüssige, dauerhafte und vorzugsweise wechselbare Verbindung zwischen dem Halter und einem Bauteil des Transportwagens sicherstellt.

Es hat sich als vorteilhaft erwiesen, den Halter mittels Adapter 20, 30 an einem Handgriff des Transportwagens anzubringen. Dieser Handgriff kann hierbei als Rundrohr ausgeführt sein. Alternativ findet bei solchen Transportwagen ein Griff Einsatz, der zusätzlich mit einem so genannten Münzpfandsystem 40 ausgestattet ist. Eine Anordnung an einer der Ecken 42 dieses Münzpfandsystems 40 ist hierbei vorteilhaft. Der Adapter 20, 30 ist für die jeweilige Anwendung entsprechend ausgeführt.

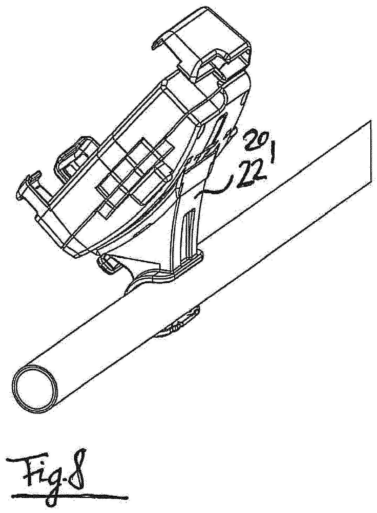

Fig. 8 zeigt einen Halter, der mittels eines Adapters 20 an einem Rundrohrgriff eines Transportwagens (nicht dargestellt) angeordnet ist. Der Adapter 20 ist an der Rückseite des Halters angeordnet. Es ist in Richtung der einen Transportwagen schiebenden Person geneigt angeordnet. Der Adapter 20 ist hierfür entsprechend ausgeführt.

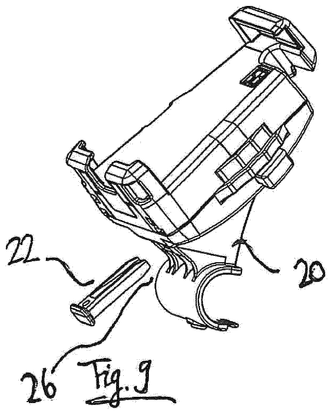

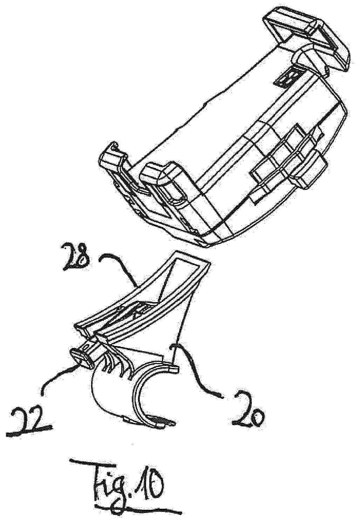

Der Adapter 20 wird vorzugsweise mittels eines zusätzlichen Stiftes 22 wechselbar oder ortsfest mit dem Halter verbunden. Fig. 9 zeigt einen solchen Stift 22. Dieser greift formschlüssig in den Adapter 20 ein, wie es in Fig. 10 dargestellt ist. Der Stift 22 kann vorzugsweise mittels eines nicht näher dargestellten Sonderschlüssels entriegelt und herausgenommen werden. Hierfür kann der Stift 22, wie dargestellt, ausgeführt sein.
Der vordere Teil des Stiftes 22 ist im vorderen Bereich vorzugsweise zwei geteilt. Die Länge des Stiftes 22 kann entsprechend der vorhanden Fläche an der Rückseite des Halters entsprechend ausgeführt sein. Der Bereich, in dem der Stift 22 aufgenommen wird, kann und sollte sehr klein gehalten werden. Die Öffnung für die Aufnahme des Stiftes 22 ist vorzugsweise im nach unten gerichteten Bereich 26 des Adapters 20 vorgesehen.

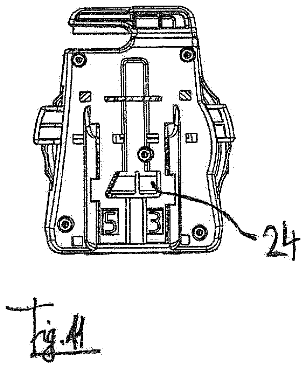

Die Rückseite des Halters weist ein Verriegelungselement 24 auf, das eine dauerhafte Verbindung zwischen Halter und Adapter 20 sicherstellt. Das Verriegelungselement 24 kann z.B. in Form eines Widerhakens ausgeführt sein, wie es aus Fig. 11 hervorgeht. Das Verriegelungselement 24 kann z.B. auf Druck gelöst werden. Dadurch ist ein einfacher Austausch eines beschädigten Halters möglich.

Vorzugsweise ist der Stift 22 aus einem Kunststoff hergestellt, andere Materialien sind auch denkbar. Der Adapter 20 weist eine C-förmige Aufnahme 21 für das Anbringen an einem Rundrohgriff auf. Ferner ist der Adapter 20 formschlüssig an der Rückseite des Halters angebracht. Dafür ist ein U-förmiger Steg 28 vorgesehen, der in Richtung Aufnahmebereich des Stiftes 22 offen ausgeführt ist. Weitere Sicherungsmittel können, sofern nötig, eingebracht werden.

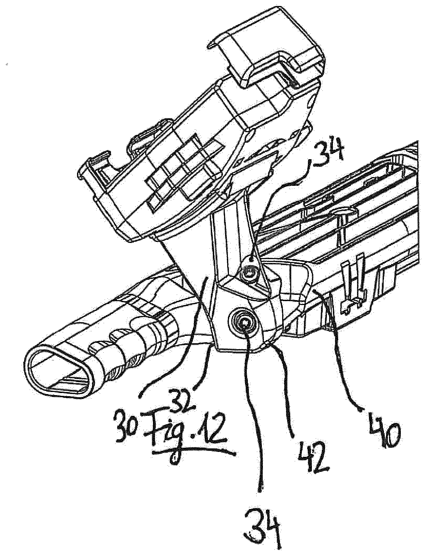

Wie in Fig. 12 dargestellt, kann ein Halter mittels eines ähnlich ausgeführten Adapters 30 an einem Münzpfandsystem 40 eines Transportwagens (nicht dargestellt) angeordnet sein. Hierfür kann sich eine verlängerte Ausfuhrungsform des Adapters 30 als sinnvoll erweisen. Das Münzpfandsystem 40 bietet ausreichend Platz für die Aufnahme eines Adapters 30. Auch hier macht eine zu der schiebenden Person eines Transportwagens geneigte Position des Halters Sinn. Ein bequemer Zugriff durch diese Positionierung kann sichergestellt sein. Bei dieser Ausführungsform wird ebenfalls eine sichere Anordnung des Adapters 30 an dem Halter, wie bereits beschrieben, gewählt. Der Adapter 30 unterscheidet sich jedoch in dem Bereich zur Anordnung 32 des Adapters 30 an dem Münzpfandsystem 40. Hier wird entsprechend des eingesetzten Münzpfandsystems 40 eine formschlüssige Anordnung des Adapters 30 vorgesehen. Eine zusätzliche dauerhafte und wechselbare Anordnung ist sicherzustellen. Daher macht der Einsatz von zusätzlichen Sicherungsmitteln 34 Sinn.

Weitere Ausführungsformen eines Adapters sind denkbar.

Es hat sich als sinnvoll erwiesen, die eingestellte Zahlenkombination auf der Rückseite des Halters, z.B. im Bereich oder unterhalb des Anordnungsbereichs des Adapters 20, 30 vorzusehen. Sofern die Zahlenkombination vergessen wurde, kann diese auf einfache Weise in Erfahrung gebracht werden.

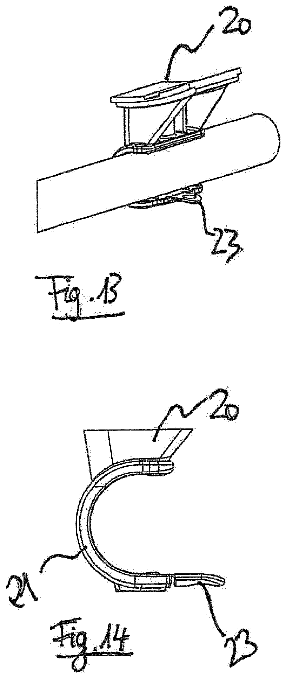

Wie in den Figuren 13 und 14 darstellt, kann in Verlängerung der C-förmige Aufnahme 21 eine Anordnungshilfe 23 angeformt sein. Diese kann in Form eines entfernbaren Filmscharniers ausgeführt sein, das, sofern es keinen Einsatz finden sollte, entfernt, insbesondere auf einfache Weise abgeschnitten oder abgerissen werden kann. Die Anordnungshilfe 23 ermöglicht eine verbesserte Anordnung an einem Rundrohr eines Transportwagens, insbesondere bei verschiedenen Größen des Querschnitts. Üblicherweise wird für die Aufnahme des Adapters 20 an dem Rundrohr eine Bohrung vorgesehen, die ein Fixierungselement wie z.B. eine Schraube oder einen Dübel, zur Befestigung aufnehmen kann. Je nachdem wie eine solche Bohrung erstellt wird, kann dies zu einer geringfügigen Veränderung des Querschnitts führen. Durch die Anordnungshilfe 23 kann dies auf einfache Art ausgeglichen werden.

Die Beschriftung 15 ist vorzugsweise als Zahl und zweistellig ausgeführt. Weiterhin sind Zahlen mit weiteren Stellen oder eine andere Beschriftung 15 denkbar. Es hat sich als sinnvoll erwiesen, die Auflagefläche 2 aus einem Kunststoff in einem Spritzgussverfahren herzustellen. Um unabhängig von der Beschriftung 15 weiterhin eine Form verwenden zu können, ist in einer besonders vorteilhaften Version der Bereich der Beschriftung 15 im Fertigungsprozess ohne eine Beschriftung 15 versehen. Die Beschriftung 15, vorliegend insbesondere eine mehrstellige Zahl, wird nachträglich aufgetragen, graviert oder anderweitig angebracht. Die Verwendung einer Lasergravur hat sich als besonders vorteilhaft erwiesen. Bei der Anordnung einer Beschriftung auf der Rückseite der Halterung, wie bereits beschrieben, kann ebenfalls diese nachträglich aufgetragen, graviert oder anderweitig angebracht werden.

Um beim Einstellen der Stellelemente 8, 9 Ungenauigkeiten auszugleichen, was dazu führen kann, dass sich der Halter nicht mehr öffnen lässt, hat es sich als sinnvoll erwiesen, ein zusätzliches Federelement 50 zu verwenden. Dieses kann beispielsweise aus einem mit einer Federkraft beaufschlagten Klotz gebildet sein. Dieser rastet in Ausnehmungen 52 ein, mittels derer sich die Position des Stellelementes 8, 9 eindeutig zuordnen lässt. Der gefederte Klotz rastet bei einem definierten Winkel ein. Hierbei kann ferner ein akustisches Signal, z.B. ein Klicken, erfolgen. Der Anwender kann somit selbständig und auf einfache Art feststellen, dass die Stellelement 8, 9 korrekt eingestellt sind.

Wie aus Fig. 9 ersichtlich ist, weist der Halter im Bereich der oberen Backe 4 eine Einbuchtung auf. Diese gewährleistet, dass die Kamera eines Smartphones nicht verdeckt wird. Beschädigungen können somit vermieden werden.

Die Backen 3, 4 können als ein Teil oder mehrteilig ausgeführt sein. Wie in Fig. 9 ersichtlich, hat sich bei Backe 3 eine Zweiteiligkeit als sinnvoll erwiesen. Beide Teile sind jeweils in der Ecke angeordnet. Die Backe 4 hingegen ist einteilig ausgeführt.

Die Backe 4 ist durch eine Feder vorgespannt, hierdurch ist das Smartphone oder Tablet immer gesichert umschlossen. Im nicht gesperrten Zustand fährt die Backe 4 somit wieder zurück in die Ursprungsposition. Ein "falsches" Einstellen des Halters ist ausgeschlossen.

Die Auslösetaste 7 ist vorzugsweise zweifarbig ausgeführt, z.B. rot und grün. Hierdurch kann optisch der Hinweis gegeben werden, wann der Halter gesperrt bzw. entsperrt ist. Der eigentliche Halter weist eine andere Farbe als die Auslösetaste 7 auf. Die Auslösetaste 7 kann einteilig mittels eines 2-K-Spritzgusses hergestellt werden. Alternativ ist die Auslösetaste 7 zweiteilig ausgeführt. Beide Teile werden dann formschlüssig zusammengesteckt.

Die Beschriftung 15 bzw. der hierfür vorgesehene Bereich kann farblich identisch ausgeführt sein, entsprechend der im Fenster 10 gezeigten Einstellkombination.

### Bezugszeichenliste

- 1: Korpus
- 2: Auflagefläche
- 3: feststehende Backe
- 4: bewegliche Backe
- 5: Randleiste
- 6: Anschluss
- 7: Auslösetaste, Sperrschieber
- 8: vorderes Stellrad, Stellelement
- 9: hinteres Stellrad, Stellelement
- 10: Fenster
- 11: Rastkörper
- 12: Rastöffnung
- 13: Schlüsselöffnung, Schlüsselelement
- 14: Schlüsselnase, Schlüsselelement
- 15: Beschriftung
- 20: Adapter
- 21: C-förmige Aufnahme
- 22: Stift
- 23: Anordnungshilfe
- 24: Verriegelungselement
- 26: nach unten gerichteter Bereich
- 28: U-förmiger Steg
- 30: weiterer Adapter
- 32: Bereich zur Anordnung
- 34: Sicherungsmittel
- 40: Münzpfandsystem
- 42: hintere Ecke
- 50: zusätzliches Federelement
- 52: Ausnehmung

## Patentansprüche

1. Klemmbackenhalter für Smartphones oder Tablets, mit einem eine Auflagefläche (2) für das Smartphone oder Tablet bildenden und einen Betätigungsmechanimus aufnehmenden Korpus (1) und zwei das Smartphone oder Tablet an zwei gegenüberliegenden Randbereichen ergreifenden Backen (3, 4), von denen mindestens eine Backe (4) zwischen einer Offenstellung und einer variablen Schließstellung beweglich und in der Schließstellung arretierbar ist, und mit einer Auslösetaste (7) zum Entsperren der Arretierung der mindestens einen beweglichen Backe (4) in deren Schließstellung,
**dadurch gekennzeichnet, dass**
die beiden Backen (3, 4) mit dem jeweiligen Randbereich des Smartphones oder Tablets übergreifenden Randelementen (5) zur formschlüssigen Aufnahme des jeweiligen Randbereichs ausgebildet sind,
und dass mindestens ein Stellelement (8, 9) vorgesehen ist, das zwischen einer Mehrzahl definierter und mit Markierungen versehener Positionen verstellbar ist und mit einem Schlüsselelement (13) ausgebildet ist, das nur in einer bestimmten Position der Mehrzahl von einstellbaren Positionen mit einem komplementären Schlüsselelement (14) der Auslösetaste (7) zusammenwirken kann, um nur in dieser bestimmten Position eine Betätigung der Auslösetaste in deren Lösestellung zu ermöglichen und in allen anderen Positionen deren Betätigung zu sperren.

2. Klemmbackenhalter nach Anspruch 1, **dadurch gekennzeichnet, dass** mindestens zwei Stellelemente (8, 9) vorgesehen sind.

3. Klemmbackenhalter nach Anspruch 1 oder 2, **dadurch gekennzeichnet, dass** das mindestens eine Stellelement (8,9) als Stellrad ausgebildet ist, das an mindestens einer Seite des Korpus (1) aus diesem herausragt.

4. Klemmbackenhalter nach Anspruch 2, **dadurch gekennzeichnet, dass** die mindestens zwei Stellelemente (8, 9) durch konzentrisch und axial hintereinander angeordnete Stellräder gebildet sind, die auf mindestens einer Seite des Korpus (1) aus diesem herausragen.

5. Klemmbackenhalter nach Anspruch 4, **dadurch gekennzeichnet, dass** von den mindestens zwei Stellräder (8, 9) das hintere Stellrad (9) einen etwas größeren Durchmesser als das vordere Stellrad (8) hat.

6. Klemmbackenhalter nach einem der Ansprüche 3 bis 5, **dadurch gekennzeichnet, dass** das Schlüsselelement (13) in Gestalt einer Schlüsselöffnung am Innenumfang des oder jedes Stellrads (8, 9) ausgebildet ist, in welche eine mit der Auslösetaste (7) verbundene Schlüsselnase (14) eintauchen kann.

7. Klemmbackenhalter nach Anspruch 1, **dadurch gekennzeichnet, dass** ein Adapter (20, 30) eine wechselbare Verbindung zwischen dem Halter und einem Bauteil eines Transportwagens aufweist.

8. Klemmbackenhalter nach Anspruch 7, **dadurch gekennzeichnet, dass** der Halter mittels Adapter (20, 30) an einem Handgriff des Transportwagens angebracht ist.

9. Klemmbackenhalter nach Anspruch 7 oder 8, **dadurch gekennzeichnet, dass** der Adapter (20) mittels eines Stiftes (22) mit dem Halter verbunden ist.

10. Klemmbackenhalter nach Anspruch 7 oder 8, **dadurch gekennzeichnet, dass** der Adapter (30) an ein Münzpfandsystem (40) des Transportwagens angeordnet ist und hierfür eine formschlüssige Anordnung des Adapters (30) vorgesehen ist.

11. Klemmbackenhalter nach Anspruch 1, **dadurch gekennzeichnet, dass** die gültige Zahlenkombination auf der Auflagefläche (2) in Gestalt einer Beschriftung (15) angebracht ist.

12. Klemmbackenhalter nach Anspruch 1, **dadurch gekennzeichnet, dass** die eingestellte Zahlenkombination auf der Rückseite des Halters vorgesehen ist.

13. Klemmbackenhalter nach Anspruch 1, **dadurch gekennzeichnet, dass** die bewegliche Backe (4) diagonal bewegbar ist.

14. Transportwagen mit einem Haltern nach einem der vorhergehenden Ansprüche.

## Claims

1. A clamping jaw holder for smartphones or tablets, having a body (1), which forms a bearing surface (2) for the smartphone or tablet and which accommodates an actuating mechanism, and two jaws (3, 4), which grip the smartphone or tablet on two opposing edge regions and of which at least one jaw (4) can be moved between an open position and a variable closed position and can be locked in the closed position, and having a release button (7) for unlocking the locking of the at least one movable jaw (4) in the closed position thereof,
**characterized in that**
the two jaws (3, 4) are configured with edge elements (5) which engage over the respective edge region of the smartphone or tablet in order to accommodate the respective edge region in a form-fitting manner,
and **in that** at least one adjusting element (8, 9) is provided, which can be adjusted between a plurality of defined positions provided with markings and is configured with a key element (13) which can interact with a complementary key element (14) of the release button (7) only in one specific position of the plurality of settable positions, in order to make an actuation of the release button into the release position thereof possible only in said specific position and to block the actuation thereof in all other positions.

2. The clamping jaw holder as claimed in claim 1, **characterized in that** at least two adjusting elements (8, 9) are provided.

3. The clamping jaw holder as claimed in claim 1 or 2, **characterized in that** the at least one adjusting element (8, 9) is configured as an adjusting wheel which protrudes from the body (1) on at least one side thereof.

4. The clamping jaw holder as claimed in claim 2, **characterized in that** the at least two adjusting elements (8, 9) are formed by adjusting wheels which are arranged concentrically and axially in succession and which protrude from the body (1) on at least one side thereof.

5. The clamping jaw holder as claimed in claim 4, **characterized in that**, of the at least two adjusting wheels (8, 9), the rear adjusting wheel (9) has a somewhat larger diameter than the front adjusting wheel (8).

6. The clamping jaw holder as claimed in one of claims 3 to 5, **characterized in that** the key element (13) is configured, on the inner circumference of the or each adjusting wheel (8, 9), in the form of a key opening into which a key nose (14) which is connected to the release button (7) can dip.

7. The clamping jaw holder as claimed in claim 1, **characterized in that** an adapter (20, 30) has a changeable connection between the holder and a component of a transport cart.

8. The clamping jaw holder as claimed in claim 7, **characterized in that** the holder is attached to a hand grip of the transport cart by means of adapters (20, 30).

9. The clamping jaw holder as claimed in claim 7 or 8, **characterized in that** the adapter (20) is connected to the holder by means of a pin (22).

10. The clamping jaw holder as claimed in claim 7 or 8, **characterized in that** the adapter (30) is arranged on a coin deposit system (40) of the transport cart and a form-fitting arrangement of the adapter (30) is provided for this purpose.

11. The clamping jaw holder as claimed in claim 1, **characterized in that** the valid number combination is arranged on the bearing surface (2) in the form of a marking (15).

12. The clamping jaw holder as claimed in claim 1, **characterized in that** the set number combination is provided on the rear side of the holder.

13. The clamping jaw holder as claimed in claim 1, **characterized in that** the movable jaw (4) is movable diagonally.

14. A transport cart having a holder as claimed in one of the preceding claims.

## Revendications

1. Support de mâchoire de serrage destiné à des Smartphones ou des tablettes et comprenant un corps (1), qui forme une surface d'appui (2) destinée au Smartphone ou à la tablette et qui reçoit un mécanisme d'actionnement, et deux mâchoires (3, 4) qui saisissent le Smartphone ou la tablette sur deux zones de bord opposées et dont au moins une mâchoire (4) est mobile entre une position ouverte et une position fermée variable et peut être bloquée dans la position fermée, et un bouton de libération (7) destiné à déverrouiller le blocage de l'au moins une mâchoire mobile (4) dans sa position fermée,
**caractérisé en ce que**
les deux mâchoires (3, 4) sont conçues avec des éléments de bord (5) s'engageant par-dessus la zone de bord respective du Smartphone ou de la tablette afin de recevoir par complémentarité de formes la zone de bord respective,
et au moins un élément de réglage (8, 9) est prévu qui est réglable entre une pluralité de positions définies et pourvues de repères et qui est conçu avec un élément formant clé (13) qui peut coopérer, uniquement dans une position déterminée de la pluralité de positions réglables, avec un élément formant clé complémentaire (14) du bouton de libération (7) pour permettre l'actionnement du bouton de libération dans sa position de libération uniquement dans cette position déterminée et pour bloquer son actionnement dans toutes ses positions.

2. Support de mâchoire de serrage selon la revendication 1, **caractérisé en ce qu'**au moins deux éléments de réglage (8, 9) sont prévus.

3. Support de mâchoire de serrage selon la revendication 1 ou 2, **caractérisé en ce que** l'au moins un élément de réglage (8, 9) est réalisé sous la forme d'une roue de réglage qui fait saillie du corps (1) sur au moins un côté de celui-ci.

4. Support de mâchoire de serrage selon la revendication 2, **caractérisé en ce que** les au moins deux éléments de réglage (8, 9) sont formés par des roues de réglage qui sont disposées concentriquement et axialement l'une derrière l'autre et qui font saillie du corps (1) sur au moins un côté de celui-ci.

5. Support de mâchoire de serrage selon la revendication 4, **caractérisé en ce que,** parmi les au moins deux roues de réglage (8, 9), la roue de réglage arrière (9) a un diamètre légèrement plus grand que la roue de réglage avant (8).

6. Support de mâchoire de serrage selon l'une des revendications 3 à 5, **caractérisé en ce que** l'élément formant clé (13) est conçu sous la forme d'une ouverture à clé sur la circonférence intérieure de la ou de chaque roue de réglage (8, 9), ouverture dans laquelle un ergot de clé relié au bouton de libération (7) (14) peut pénétrer.

7. Support de mâchoire de serrage selon la revendication 1, **caractérisé en ce qu'**un adaptateur (20, 30) comporte une liaison échangeable entre le support et un composant d'un chariot.

8. Support de mâchoire de serrage selon la revendication 7, **caractérisé en ce que** le support peut être monté sur une poignée du chariot au moyen d'un adaptateur (20, 30).

9. Support de mâchoire de serrage selon la revendication 7 ou 8, **caractérisé en ce que** l'adaptateur (20) est relié au support au moyen d'une goupille (22).

10. Support de mâchoire de serrage selon la revendication 7 ou 8, **caractérisé en ce que** l'adaptateur (30) est disposé sur un système de consigne (40) du chariot et un ensemble à complémentarité de formes de l'adaptateur (30) est prévu pour cela.

11. Support de mâchoire de serrage selon la revendication 1, **caractérisé en ce que** la combinaison valide de chiffres est montée sur la surface d'appui (2) sous la forme d'un lettrage (15).

12. Support de mâchoire de serrage selon la revendication 1, **caractérisé en ce que** la combinaison de chiffres réglée est prévue sur le côté arrière du support.

13. Support de mâchoire de serrage selon la revendication 1, **caractérisé en ce que** la mâchoire mobile (4) peut être déplacée en diagonale.

14. Chariot comprenant un support selon l'une des revendications précédentes.
